# EUROPÄISCHE PATENTANMELDUNG

(11) **EP 2 527 662 A1**
(43) Veröffentlichungstag der Anmeldung: **28.11.2012**
(21) Anmeldenummer: 12171461.2
(22) Anmeldetag: 27.11.2009
(51) Int. Cl.: F16B 5/00, F16B 5/01, F16B 13/14

(54) **Beschlag und Leichtbauplatte mit einem Beschlag**

(30) Priorität: 27.11.2008 DE 102008059336; 27.11.2008 DE 202008015722 U; 27.11.2008 DE 202008015732 U; 18.05.2009 DE 102009025826
(62) Teilanmeldung aus: 09799052.7
(71) Anmelder: Hettich-Heinze GmbH & Co. KG, 32139 Spenge (DE)
(72) Erfinder: Nolte, Frank, 49086 Osnabrück (DE)
(74) Vertreter: Dantz, Jan Henning

(57) **Zusammenfassung**

Ein Beschlag zum Festlegen einer aus zwei Deckplatten (2, 4) und einer dazwischen liegenden Mittelschicht (3) bestehenden Leichtbauplatte (1) an einer hierzu senkrecht verlaufenden zweiten Leichtbauplatte, einer Wand, einer ortsfesten Wandplatte oder dergleichen, weist ein zwischen den Deckplatten (2, 4) durch Klebemittel festlegbares Gehäuse mit Kanälen zur Verteilung von Klebemittel und einen Einführkanal für einen Befestigungsstift auf, wobei die Kanäle für das Klebemittel einerseits in mindestens eine von außen zugängliche Einfüllöffnung und andererseits in die jeweils an den Deckplatten (2, 4) der Leichtbauplatte (1) anliegenden randseitigen Bereiche mit Aufnahmekammern für Klebemittel bildende Vertiefungen einmünden. Das Gehäuse ist in eine Bohrung (5') der Leichtbauplatte (1) eingesetzt ist, welche mindestens eine der Deckplatten (2, 4) geringfügig anschneidet und dass die Aufnahmekammern des Gehäuses durch einen angeschnittenen Abschnitt zur jeweiligen Deckplatte (2, 4) hin oder durch eine Deckplatte (2, 4) unmittelbar abgeschlossen sind.

## Beschreibung

Die vorliegende Erfindung betrifft einen Beschlag zum Festlegen einer aus zwei Deckplatten und einer dazwischen liegenden Mittelschicht bestehenden Leichtbauplatte nach dem Oberbegriff des Anspruches 1 sowie eine Leichtbauplatte mit einem Beschlag.

Es ist bekannt, dass die Festlegung von Beschlägen bei Leichtbauplatten schwierig ist, da die mit Hohlräumen versehene Mittelschicht nicht zur Aufnahme von Kräften geeignet ist. Insofern ergibt sich gerade an den Stirnseiten das Problem, Beschläge auf effektive Weise mit hoher Festigkeit zu fixieren. Bisher wurden Beschläge an einer Innenseite der Deckplatten angeklebt, was eine direkte Verbindung des Beschlages mit den beiden Deckplatten ermöglicht. Allerdings ist auch hier die Festigkeit begrenzt, da die ebene Anordnung der Deckplatte Kräfte in der Ebene der Deckplatte nur begrenzt aufnehmen kann. Zudem ist das Einbringen von Klebstoff schwierig, da die Dicke der Mittelschicht toleranzbehaftet abweichen kann und somit die Qualität der Klebeverbindung stark variiert. Schließlich ist das Verkleben der Beschläge einer automatisierten Fertigung nur schlecht zugänglich.

Es ist daher Aufgabe der vorliegenden Erfindung, einen Beschlag und eine Leichtbauplatte mit einem Beschlag zu schaffen, die eine effektive Befestigung des Beschlages an der Leichtbauplatte ermöglichen, wobei die Befestigung eine hohe Stabilität aufweisen soll.

Diese Aufgabe wird mit einem Beschlag mit den Merkmalen des Anspruches 1 gelöst.

Erfindungsgemäß wird ein Beschlag zum Festlegen einer aus zwei Deckplatten und einer dazwischen liegenden Mittelschicht bestehenden Leichtbauplatte nach dem Anspruch 1 bereitgestellt, der leicht zu montieren ist und hohe Haltekräfte besitzt.

Vorzugsweise sind bei dem Beschlag zwischen den Kanälen zum Einfüllen von Klebemittel und den Aufnahmekammern durch Querschnittsverminderungen gebildete Blenden vorgesehen. Die Blende bewirkt, dass der Rücklauf von in die Aufnahmekammern eingebrachtem Klebemittel vermieden wird.

Gemäß einer weiteren Ausgestaltung sind die Aufnahmekammern an ihrem dem Gehäuse abgewandt liegenden stirnseitigen Ende durch die der Kontur der angeschnittenen Bereiche der Deckplatten angepasste Wandungen abgeschlossen.

Für eine besonders feste Verbindung zwischen Beschlag und Leichtbauplatte wird als Klebmittel vorzugsweise Heißkleber mit einer Temperatur zwischen 80 °C und 180 °C, insbesondere zwischen 100 °C und 160 °C eingespritzt. Es ist jedoch auch möglich jede andere Form von Klebemittel wie z.B. 1 Komponentenkleber, 2 Komponentenkleber oder Leim zu verwenden. Auch schäumende Klebemittel können hier zur Anwendung kommen.

Die Mittelschicht der Leichtbauplatten weicht in ihren chemischen und/oder physikalischen Eigenschaften von den mindesten zwei Deckplatten ab. Derzeit sind Mittelschichten bekannt die aus leichten Hölzern wie z.B. Balsa bestehen. Eine weitere Möglichkeit ist, die Mittelschicht aus Fasermaterialien wie z.B. Hanf- oder Strohfasern aufzubauen. Weiterhin können in der Mitteschicht Hohlräume wie z.B. bei Strangpress-Röhrenspanplatten oder Wabenplatten erzeugt werden. Außerdem kann die Dichte zwischen Mittelschicht und Decklagen variiert werden, um eine Leichtbauplatte zu erhalten. Denkbar ist auch, die Mittelschicht als Schaum auszuführen wie z.B. bei Schaumkernplatten. Weiterhin ist denkbar, zur Erhöhung der Stabilität zusätzlich weitere mit den physikalischen und / oder chemischen Eigenschaften der Deckplatten identische Zwischenplatten in das Verbundmaterial einzubringen. Des weiteren ist dieses Verfahren für jegliche nach dem zuvor beschriebenen Konzept aufgebaute bisher nicht bekannte Leichtbauplatten geeignet. Die Deckplatten der Leichtbauplatten sind bevorzugt darauf ausgelegt Zugbelastungen standzuhalten, die Mittelschicht hält bevorzugt Druckbelastungen stand.

Vorzugsweise ist an einer Stirnseite der Leichtbauplatte mindestens eine Bohrung eingebracht, in die ein Beschlag eingefügt ist. Die Bohrung umfasst einen im Querschnitt kreisförmigen Bohrkanal, der teilweise in mindestens eine Deckplatte eingreift. Der Beschlag ist dabei über ein Klebemittel festgelegt, wobei das Klebemittel in einer Klebemittelkammer angeordnet ist, deren äußere Begrenzung teilweise durch den Bohrkanal gebildet ist. Dadurch erfolgt eine Festlegung des Beschlags über eine Klebemittelkammer, die an dem gerundeten Bereich des Bohrkanals angeordnet ist, so dass Kräfte in unterschiedliche Richtungen auf die Deckplatte der Leichtbauplatte übertragen werden können. Dies erhöht die Festigkeit der Verbindung zwischen Beschlag und Leichtbauplatte erheblich.

Für eine exakte Positionierung des Beschlages liegt dieser vorzugsweise an gegenüberliegenden Seiten formschlüssig an den Deckplatten an. Diese Positionierung hat zudem den Vorteil, dass die Klebemittelkammer weitgehend abgedichtet ist, wobei an dem Beschlag entsprechende Wände ausgebildet sind, die an der Deckplatte anliegen, so dass Klebemittel nur in geringem Maße durchtreten kann. Der seitliche Spalt an der Klebekammer in einem Bereich zwischen 0,1 mm und 0,5 mm, der konstruktiv festgelegt ist, regelt einen geplanten Überlauf des überschüssigen Klebemittels.

Vorzugsweise weist der Beschlag ein topfförmiges Gehäuse auf, das stirnseitig an der Leichtbauplatte eingefügt ist. Dabei kann an dem topfförmigen Gehäuse im Bereich der Stirnseite der Leichtbauplatte ein Flansch ausgebildet sein, der als Anschlag zur Begrenzung der Einstecktiefe des Beschlages dient. Zudem kann an dem topfförmigen Gehäuse ein in die Leichtbauplatte ragender Vorsprung ausgebildet sein, der Begrenzungswände für die Klebemittelkammer ausbildet. Die Klebemittelkammer ist in Längsrichtung parallel zum Bohrkanal ausgerichtet und besitzt insofern eine leistenförmige längliche Kontur. An den Stirnseiten der Klebemittelkammer sind an dem Beschlag entsprechende Wandabschnitte zum Verschließen der Klebemittelkammer ausgebildet.

Die Erfindung wird nachfolgend anhand mehrerer Ausführungsbeispiele mit Bezug auf die beigefügten Zeichnungen näher erläutert. Es zeigen:
- Figuren 1 A bis 1 D: mehrere Ansichten eines erfindungsgemäßen Verbindungsbeschlages bei der Montage;
- Figuren 2A und 2B: zwei Ansichten eines ersten Gehäuses des Verbindungsbeschlages der Figur 1;
- Figuren 3A bis 3E: mehrere Ansichten eines zweiten Gehäuses des Verbindungsbeschlages der Figur 1; und

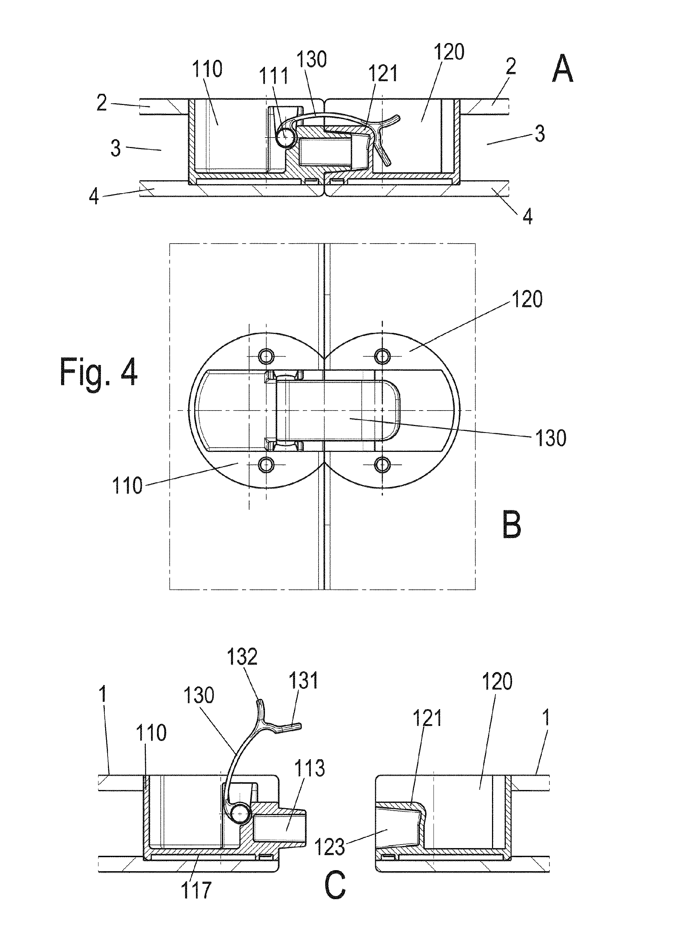

- Figuren 4A bis 4C: mehrere Ansichten des Verbindungsbeschlages der Figur 1 bei der Montage.

Ein Verbindungsbeschlag dient zur stirnseitigen Befestigung zweier benachbarter Möbelplatten 1, die insbesondere in Leichtbauweise ausgeführt sind und zwei äußere Deckplatten 2 und 3 umfassen, zwischen denen eine Mittelschicht 4 angeordnet ist. Die Mittelschicht 4 besteht aus einem anderen Material als die Deckplatten 2 und 3, insbesondere aus einer Wabenplatte, einem Schaumkern, leichten Hölzern, Faserwerkstoffen oder anderen Materialien mit geringem Eigengewicht. Die Deckplatten 2 und 3 bestehen vorzugsweise aus Holzwerkstoffen oder Pappe, wobei auch andere Materialien eingesetzt werden können. Die in Leichtbauweise ausgeführten Möbelplatten 1 weisen eine umlaufende Stütz- und Dekorkante auf, die einerseits der Stabilisierung und dem Verschließen der Stirnfläche der Möbelplatte 1 dient, andererseits auch eine design-ästhetische Funktion übernehmen kann.

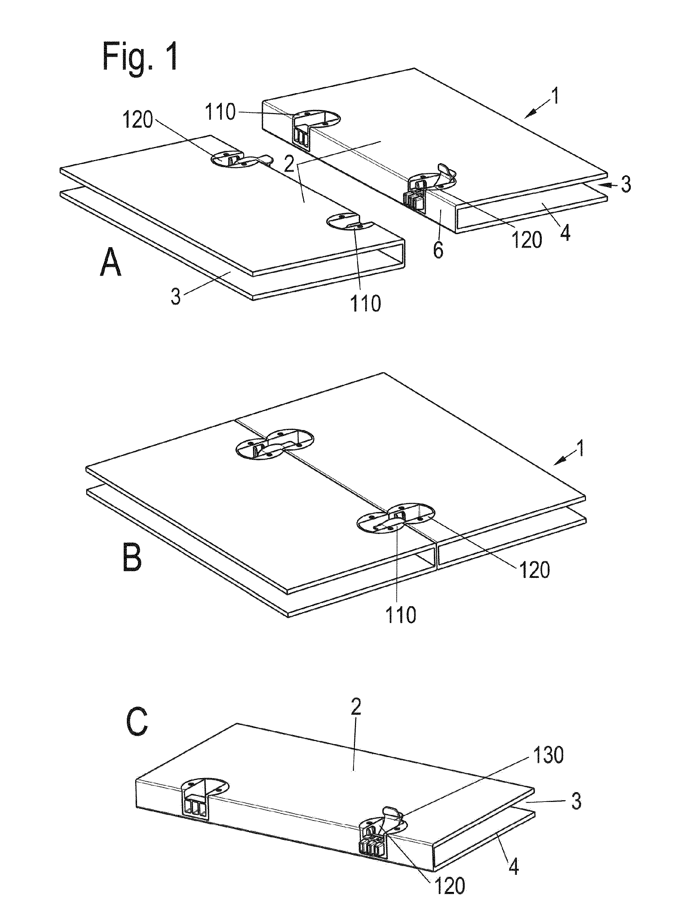

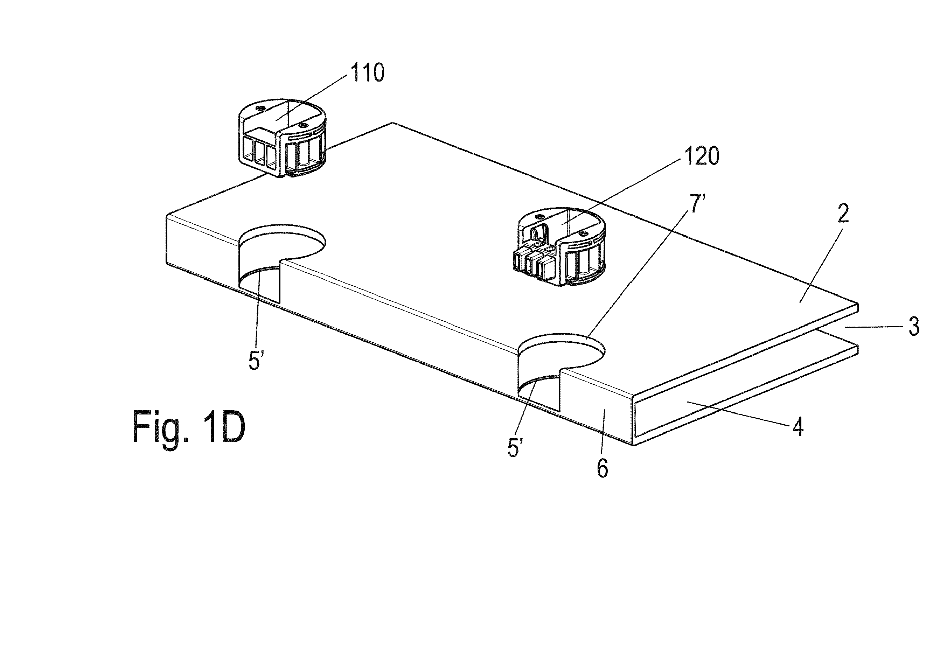

Bei dem in den Figuren 1A bis 1D gezeigten Ausführungsbeispiel sind an jeder Möbelplatte 1 ein erstes Gehäuse 110 und ein zweites Gehäuse 120 eines Verbindungsbeschlages montiert. Die Gehäuse 110 und 120 sind über ein Rastelement 130 aneinander fixierbar.

Zur Festlegung der Gehäuse 110 und 120 sind benachbart zu einer Stirnseite 6 jeweils Aufnahmen 5' ausgespart, die die obere Deckplatte 2 durchgreifen und sich bis in die untere Deckplatte 3 erstrecken, wobei diese jedoch eine bodenseitige Abstützung für die Gehäuse 110 und 120 bildet. In der oberen Deckplatte 2 ist eine ringförmige Aussparung 7' gebildet, an der die Gehäuse 110 und 120 verklebt werden.

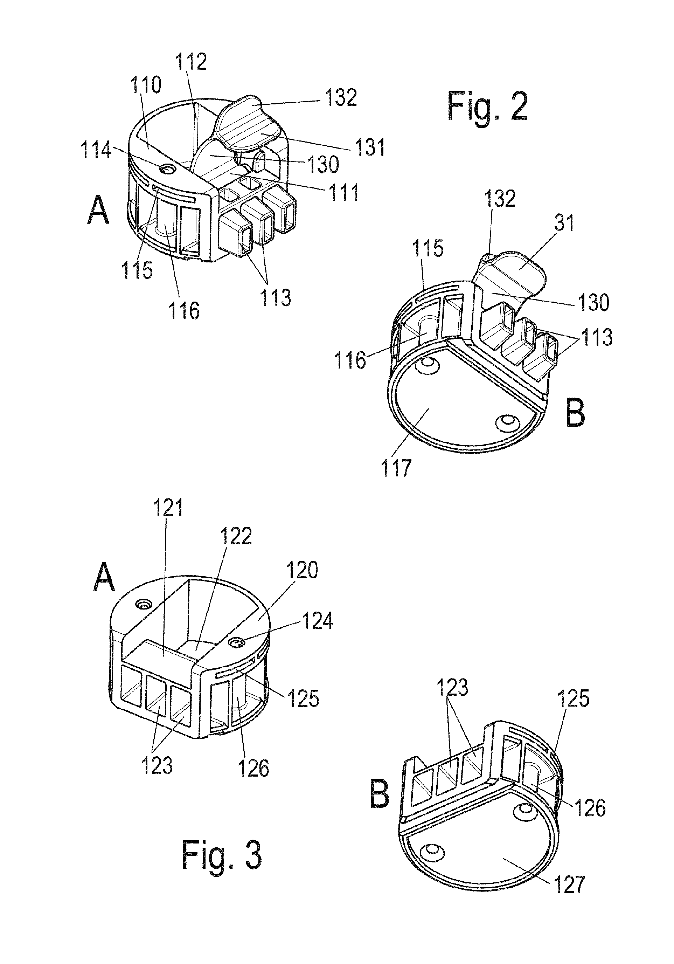

In den Figuren 2A und 2B ist das erste Gehäuse 110 gezeigt, an dem das Rastelement 130 festgelegt ist. Das Rastelement 130 ist um eine Achse 111 drehbar gelagert und umfasst eine federnde Lasche 131, die in Eingriff mit einer Rastaufnahme 121 an dem zweiten Gehäuse 120 bringbar ist. Ferner ist an dem Rastelement 130 ein Griffabschnitt 132 vorgesehen. Das Gehäuse 110 ist topfförmig ausgebildet und umfasst eine innere Kammer 112 zur Aufnahme des Rastelementes 130.

An einer Stirnseite des ersten Gehäuses 110 sind drei Vorsprünge 113 ausgebildet, die zur exakten Positionierung des ersten Gehäuses 110 relativ zu dem zweiten Gehäuse 120 dienen.

Das erste Gehäuse 110 weist ferner Öffnungen 114 zum Zuführen von Klebemittel auf, das über Kanäle 116 verteilt wird. Von den Klebemittelkanälen 116 erstrecken sich Öffnungen 115 zum Verkleben des Gehäuses 110 an der ringförmigen Aufnahme 7' der oberen Deckplatte 2. Ferner sind die Kanäle 116 in Verbindung mit einer Klebemittelkammer 117 an der Unterseite des Gehäuses 110 zum Verkleben an der unteren Deckplatte 3 vorgesehen.

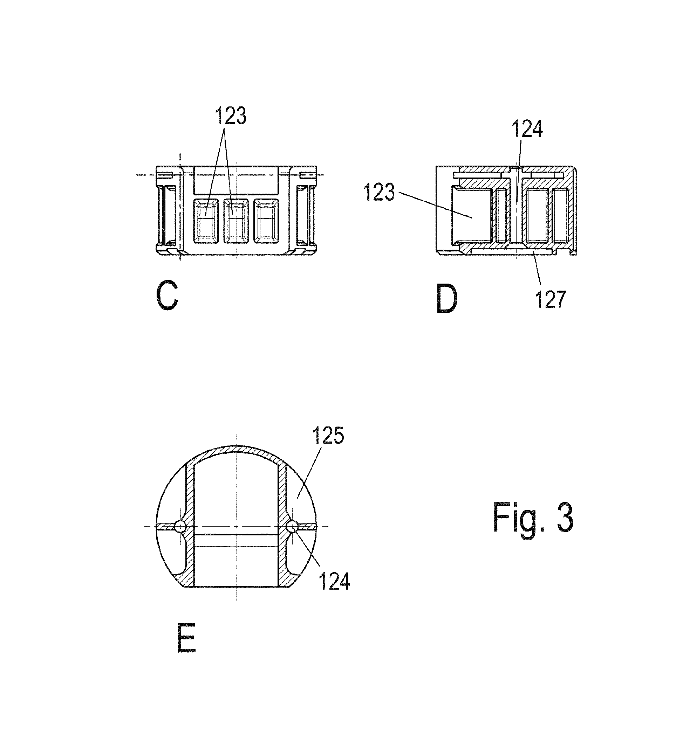

Das Gehäuse 120 (Figuren 3A bis 3E) lässt sich auf ähnliche Weise in einer Möbelplatte 1 festlegen. Das Gehäuse 120 umfasst Öffnungen 124 zum Zuführen von Klebemittel, das über Klebemittelkanäle 126 verteilt wird. Die Klebemittelkanäle 126 münden im oberen Bereich in Öffnungen 125, um ein Verkleben an der oberen Deckplatte 2 zu ermöglichen. Ferner ist bodenseitig eine Klebemittelkammer 127 an dem Gehäuse 120 zum Verkleben an der unteren Deckplatte 4 ausgebildet. Die Klebemittelkammer 127 umfasst einen umlaufenden nach unten hervorstehenden Rand und ist zu der Deckplatte 4 hin offen ausgebildet.

Das Gehäuse 120 umfasst eine innere Kammer 122, an der eine Rastaufnahme 121 ausgebildet ist, die in Eingriff mit dem Rastelement 130 bringbar ist. Unterhalb der Rastaufnahme 121 sind Aufnahmen 123 vorgesehen, in die die Vorsprünge 113 einsteckbar sind. Die Vorsprünge 113 sind dabei keilförmig ausgebildet, um eine exakte Positionierung zu gewährleisten.

Für die Montage des Verbindungsbeschlages mit den Gehäusen 110 und 120 werden zunächst an jeder Möbelplatte 1 Bohrungen 5' hergestellt, wobei die Bohrer nicht in der Ebene der Möbelplatte 1 bewegt werden sondern senkrecht hierzu. Die Bohrungen 5' sind so positioniert, dass sie auch an der Stirnseite 6 der Möbelplatte 1 eine Aussparung herstellen. Anschließend werden die Gehäuse 110 oder 120 in die Bohrung 5' eingefügt und dann mit der Möbelplatte 1 verklebt. Zur Verbindung zweier benachbarter Möbelplatten 1 werden diese mit einer an einer Stirnseite angeordneten Stütz- und Dekorkante 6 aneinander gelegt, wobei die Vorsprünge 113 jeweils in die Aufnahmen 123 eines benachbarten Gehäuses 120 eingefügt werden. Zur Sicherung der Verbindung wird nun das Rastelement 130 um die Achse 111 verschwenkt, bis die Laschen 131 an der Rastaufnahme 121 einrasten. Zum Lösen werden dann die Rastelemente 130 über den Griffabschnitt 132 in die gegenläufige Richtung bewegt.

Die Form und die Funktion der Beschläge 110 und 120 kann in weiten Bereichen frei gewählt werden. Die Beschläge 110 und 120 weisen lediglich eine Begrenzung für eine Klebemittelkammer auf, um eine stabile Befestigung des Beschlages 110 und 120 in einer Leichtbauplatte 1 zu gewährleisten.

### Bezugszeichenliste

- 1: Leichtbauplatte
- 2: Deckplatte
- 3: Mittelschicht
- 4: Deckplatte
- 5': Bohrung
- 6: Stirnseite

- 110: Erstes Gehäuse
- 111: Achse
- 112: Kammer
- 113: Vorsprung / Rasthebel
- 114: Öffnung
- 115: Kanal
- 116: Klebemittelkammer
- 120: Zweites Gehäuse
- 121: Rastaufnahme
- 122: Kammer
- 123: Aufnahme
- 124: Öffnung
- 125: Öffnung
- 126: Klebemittelkanal
- 127: Klebemittelkammer
- 130: Rastelement
- 131: Lasche
- 132: Griffabschnitt

## Patentansprüche

1. Beschlag zum Festlegen einer aus zwei Deckplatten (2, 4) und einer dazwischen liegenden Mittelschicht (3) bestehenden Leichtbauplatte (1) an einer hierzu senkrecht verlaufenden zweiten Leichtbauplatte, einer Wand, einer ortsfesten Wandplatte oder dergleichen, wobei der Beschlag (110, 120) ein zwischen den Deckplatten (2, 4) durch Klebemittel festlegbares Gehäuse mit Kanälen zur Verteilung von Klebemittel aufweist, wobei die Kanäle für das Klebemittel einerseits in mindestens eine von außen zugängliche Einfüllöffnung und andererseits in die jeweils an den Deckplatten (2, 4) der Leichtbauplatte (1) anliegenden randseitigen Bereiche mit Aufnahmekammern für Klebemittel bildende Vertiefungen einmünden, **dadurch gekennzeichnet, dass** das Gehäuse in eine Bohrung (5') der Leichtbauplatte (1) eingesetzt ist, welche mindestens eine der Deckplatten (2, 4) geringfügig anschneidet und dass die Aufnahmekammern des Gehäuses durch einen angeschnittenen Abschnitt zur jeweiligen Deckplatte (2, 4) hin oder durch eine Deckplatte (2, 4) unmittelbar abgeschlossen sind.

2. Beschlag nach Anspruch 1, **dadurch gekennzeichnet, dass** zwischen den Kanälen zum Einfüllen von Klebemittel und den Aufnahmekammern durch Querschnittsverminderungen gebildete Blenden vorgesehen sind.

3. Beschlag nach Anspruch 1 oder 2, **dadurch gekennzeichnet, dass** die Klebemittelkammern (13) an ihrem dem Gehäuse (9) abgewandt liegenden stirnseitigen Ende durch der Kontur der angeschnittenen Bereiche der Deckplatten (5, 6) angepasste Wandungen (13) abgeschlossen sind.

4. Beschlag nach einem der vorhergehenden Ansprüche, **dadurch gekennzeichnet, dass** ein erstes Gehäuse (110) und ein zweites Gehäuse (120) über ein Rastelement (130) aneinander fixierbar sind.

5. Beschlag nach Anspruch 4, **dadurch gekennzeichnet, dass** das Rastelement (130) um eine Achse (111) drehbar gelagert ist und eine federnde Lasche (131) umfasst, die in Eingriff mit einer Rastaufnahme (121) an dem zweiten Gehäuse (120) bringbar ist.

6. Beschlag nach Anspruch 5, **dadurch gekennzeichnet, dass** unterhalb der Rastaufnahme (121) Aufnahmen (123) vorgesehen sind, in die die Vorsprünge (113) einsteckbar sind.

7. Beschlag nach Anspruch 6, **dadurch gekennzeichnet, dass** die Vorsprünge (113) keilförmig ausgebildet sind.

8. Beschlag nach einem der vorhergehenden Ansprüche, **dadurch gekennzeichnet, dass** der Beschlag einen Einführkanal für einen Befestigungsstift aufweist.

9. Leichtbauplatte mit einem Beschlag nach einem der vorhergehenden Ansprüche, **dadurch gekennzeichnet, dass** zur Festlegung der Gehäuse (110) und (120) benachbart zu einer Stirnseite (6) jeweils Aufnahmen (5') ausgespart sind, die die obere Deckplatte (2) durchgreifen und sich bis in die untere Deckplatte (3) erstrecken.
